# EUROPEAN PATENT SPECIFICATION

(11) **EP 1 881 497 B1**
(45) Date of publication and mention of the grant of the patent: **19.08.2009**
(21) Application number: 07016736.6
(22) Date of filing: 01.04.1997
(51) Int. Cl.: G11B 19/00, G11B 19/20, G11B 25/04, G11B 33/14, H02K 5/22, H02K 3/50

(54) **Disk storage device with improved spindle torque and acceleration**
Plattenspeichergerät mit verbessertem Spindeldrehmoment und Beschleunigung
Dispositif de stockage sur disque doté d'un couple et d'une accélération d'axe améliorés

(43) Date of publication of application: 23.01.2008
(62) Divisional of application: 97105430.9
(73) Proprietor: Papst Licensing GmbH & Co. KG, 78112 St Georgen (DE)
(72) Inventor: Papst, Georg F., 78112 St. Georgen (DE)
(74) Representative: Göhring, Robert

(56) References cited:
- JP-A- 60 103 554
- JP-A- 62 125 573

## Description

This invention relates to disk storage devices and, more particularly, to a disk storage device having a spindle motor with enhanced torque, acceleration and vibration characteristics.

Such a spindle motor is disclosed in JP-A 62 12 5573.

### BACKGROUND OF THE INVENTION

Disk storage devices, especially disk storage devices utilizing one or more rigid magnetic data storage disks directly coupled to the rotor of a spindle drive motor typically use an "outer rotor" brushless DC motor for rotating the storage disks past data read/write heads. The heads write and read digital data on the surface of the disks. In an "outer rotor" brushless motor, a rotor having an annular permanent magnet surrounds a multi-pole stator that is mounted concentric with the shaft defining the rotation axis of the motor.

An outer rotor motor employs a rotor that encompasses the stator element. The rotor therefore requires a diameter that adds to the mass and angular inertia of the rotor and increases the time required for the motor to reach the operating speed, which may be 6000 RPM or higher, at the time of startup. The radially displaced mass also amplifies vibrations due to imbalances, especially at higher operational speeds.

It is an object of the invention to provide a disk storage device that utilizes a spindle drive motor that has a reduced rotary mass and angular inertia and accordingly reduces the time required to accelerate the storage disks to operating speed at the time of startup.

It is a further object to provide a disk storage device that has an increased diameter spindle support structure to enhance the rigidity of the disk axis.

Still a further object is to provide a disk storage device that reduces the amount of spindle run out caused by play in the support bearings.

Another object is to allow location of the drive elements of the spindle motor outside the clean room chamber without significantly increasing the mass or angular inertia of the rotating elements.

Yet another object is to provide a disk storage device that reduces radially-displaced spindle mass and is capable of operation at higher speeds with lower vibration.

### SUMMARY OF THE INVENTION

The foregoing and other objects are achieved by providing a disk storage device in particular according to claim 1.

Objects, features and advantages of the invention are illustrated in the following description of preferred embodiments, as illustrated in the drawings as follows.

### BRIEF DESCRIPTION OF THE DRAWINGS

FIG. 1 is a cross-sectional view taken along the spindle axis of a first embodiment of disk storage device according to the invention.
FIG. 1a is a cross-sectional view taken along the line la-la of FIG. 1 showing how the stator cooperates with the rotor and rotor magnet.
FIG. 2 is a cross-sectional view taken along the spindle axis of a second embodiment of disk storage device according to the invention.
FIG. 3 is a cross-sectional view of a portion of a third embodiment of the invention showing an alternate form of electrical contact device for connecting the stator windings to control circuitry that is mounted external to the housing of the disk storage device.

### DETAILED DESCRIPTION OF PREFERRED EMBODIMENTS

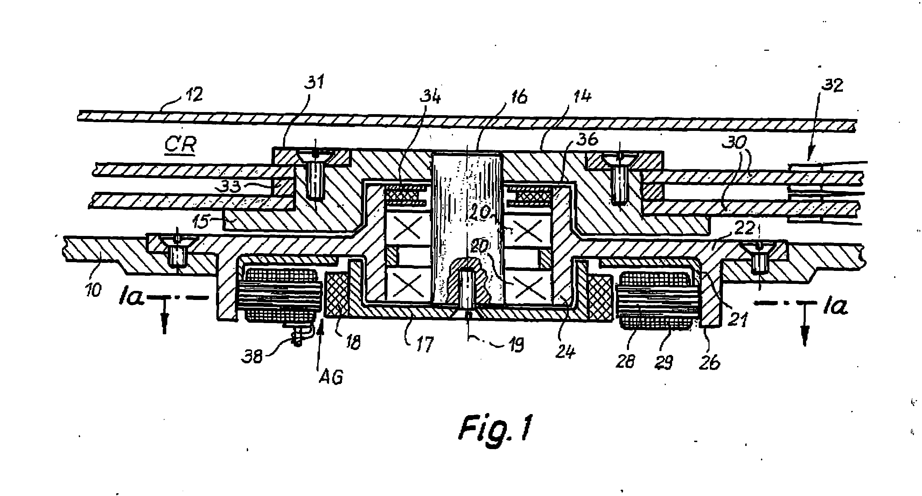

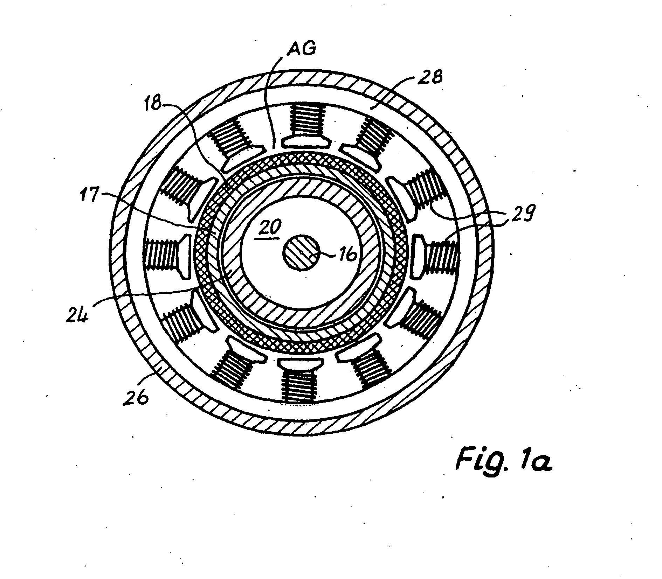

Referring to FIG. 1, a first embodiment of a disk storage device according to the invention includes a housing having a base plate 10 and a partition 12. Base plate 10 and partition 12 cooperate with side walls (not shown) to define a clean room chamber CR. The chamber CR is a finally sealed clean room manufactured to HDD industry contamination standards for controlling the amount of particulate matter and other contaminants coming into contact with the storage disks.

Data storage disks 30, which may be magnetic hard disks, are located within the clean-room and cooperate with data read/write transducers 32. Transducers 32 are mounted on actuator arms to move relative to the surface of the disks to read and write (record) data in tracks on the storage surfaces. Each storage disk 30 has a central opening of standard diameter that fits over the disk mounting portion of a hub 14. The hub 14 is press-fit on, or otherwise attached to, a shaft 16 that is supported to rotate about spindle axis 19. The storage disks 30 are coupled to the hub 14 by a radially-extending disk support flange 15, spacer ring 33, and clamping ring 31 in a conventional manner.

The shaft 16 and hub 14 are rotatably driven by a brushless D.C. motor having a rotor 17 and stator 28. Rotor 17 may be made of a ferromagnetic material such as soft iron or steel and is circular with a cylindrical flange at its periphery. An annular permanent magnet 18 is affixed to the peripheral flange of the rotor. Magnet 18 is surrounded by the lamination of stator 28 and is spaced from the stator pole faces to form a cylindrical air gap AG.

The relationship between the stator elements and the rotor are illustrated in FIG. 1a. The stator is supported on a cylindrical projection 26 which is part of an assembly flange 22 (FIG. 1). Flange 22 fits into a circular opening in the base plate 10 and is attached thereto by fasteners such as screws. Assembly flange 22 includes a bearing tube 24 that is concentric with the spindle axis 19. Bearing tube 24 supports on its cylindrical inner surface a pair of axially spaced bearings 20 that rotatably support shaft 16.

Timed current pulses are supplied from a motor control circuit (not shown) through a contact member 38 to the stator windings. Magnetic flux generated by the stator 28 windings within lamination interacts with the flux produced by the rotor magnet 18 to apply torque to rotor 17. The latter in turn rotates the shaft 16, hub 14 and disks 30 to move the storage surfaces of the disks past read/write heads 32 so that data transfer occurs between the heads and the data storage tracks on the disks. A ferromagnetic shielding ring 21 is affixed to the flange 22 adjacent the magnet 18, air gap and stator 28. The ring 21 prevents any stray flux produced by the motor parts from penetrating the clean-room and impinging on the data storage surfaces of the disks.

Contaminants such as particulate matter emanating from the stator and rotor elements cannot migrate into the clean room because the motor is mounted outside the clean room on the opposite side of the base plate. A cover (not shown) may be affixed to the projection 26 to enclose the stator and rotor to keep foreign objects from interfering with motor operation. However, a printed circuit board supporting the motor control circuitry and other circuit elements may be affixed in a frame suspended below the base plate to serve the same function, making a separate motor cover unnecessary.

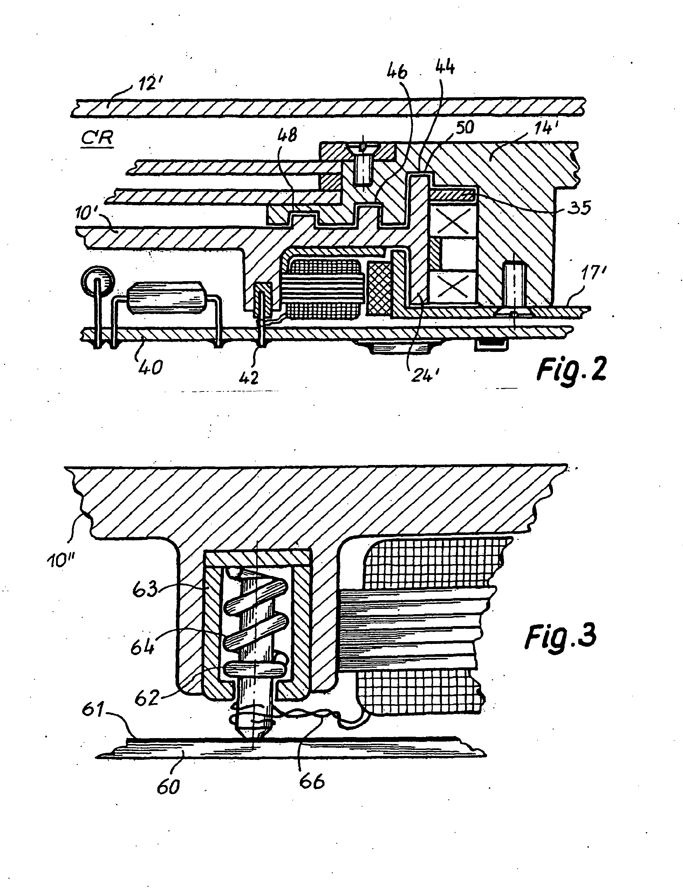

Bearings 20 are also a source of contaminants. A sealing member 34, such as a ferrofluidic sealing ring, is inserted at the end of bearing tube 24 closest to the clean room to prevent contaminants from entering the clean room. Alternatively, the underside of hub 14 and the outer diameter of the upper portion of bearing tube 24 can be precisely machined to establish a narrow gap 36. Gap 36 may operate as a "gap seal," making it possible to eliminate the seal 34 or replace it with a simple ring or washer, as illustrated in FIG. 2.

Because the rotor 17 is arranged as an inner rotor, it has a reduced radial dimension as compared to an outer rotor of comparable torque. This enables the mass of the rotor to be reduced and displaced inwardly so that the moment of inertia of the rotating structure is reduced, allowing more rapid acceleration of the spindle at the time of startup. Further, placement of the stator at the periphery of the motor frees up space near the spindle axis. This allows the bearings to be separated by a greater axial distance without increasing the height of the spindle. As a result a more compact disk storage device can be constructed without the need to position the motor inside the clean room.

Referring to Fig. 2, the embodiment there shown is similar to that of Fig. 1 but uses gap-type seals in place of ferrofluidic seal 34. The spindle motor of Fig. 2 is integrated into the base plate 10, rather than mounted on a separate assembly flange as shown in Fig. 1. It also employs an integral hub 14' and shaft i.e., the shaft and hub are formed together as a one-piece unit out of a material such as an aluminum alloy or steel. A washer 35 is inserted near the top of bearing tube 24' and functions to entrap particles from the bearings within the bearing tube. Particles that escape through the narrow gap between the shaft portion of the hub 14' and washer 35 enter a gap 50 formed between the underside of hub 14' and the top of bearing tube 24'. An annular groove 44 in the underside of the hub meshes with the upper end of the bearing tube so that gap 50 is in the form of a labyrinth seal. This seal further retards the migration of contaminant particles toward the clean room. Additional labyrinth seals may be provided via further annular grooves, such as those shown at reference signs 46 and 48, machined into the underside of the hub. These grooves mesh with raised annular projections formed on the upper side of the base plate 10', providing two additional labyrinth seals for retarding the transfer of contaminants still further.

Fig. 2 also shows a printed circuit board (PCB) 40 suspended on a frame (not shown) parallel to the base plate in the area of the spindle motor. PCB 40 supports motor control circuitry for generating the timed current pulses that energize the stator windings of the motor. Electrical connection of the stator circuits with the control circuitry is achieved through use of a connector pin 42 mounted within in an insulating bushing on the outside of base plate 10'. This type of connection simplifies the manufacturing process and facilitates easy removal of PCB 40 for testing and repair purposes.

Fig. 3 shows a modified form of quick-disconnect contact member that includes a contact pin 62 mounted in base plate 10" within an insulated housing 63. A spring 64 biases contact pin 62 toward PCB 60. A conductive pad 61 is provided on PCB 60 to conductively engage the tip of contact 62. Stator leads 66 are connected to contact pin 62 to couple the control pulses to the stator windings. Pin 62 and pad 61 may be plated with a highly conductive material such as gold or silver to enhance the electrical integrity of the connection.

The disk storage device of the invention provides several advantages. The motor elements can be located outside the clean room, whereby the danger of clean room contamination is reduced, without materially increasing the mass or angular inertia of the rotating elements. This, in turn, improves the acceleration characteristics of the disk drive at the time of startup. Further, the mass of the rotating elements of the spindle motor is both reduced and displaced toward the axis of rotation, enabling improvement in acceleration characteristics and reducing vibrations caused by imbalance in the rotating parts. Still further, removal of the stator from the area immediately surrounding the spindle axis leaves more space in that region that is utilized for achieving greater axial separation of the bearings. This reduces spindle run out caused by bearing wear and play. Additionally, the spindle assembly is supported for rotation by a bearing tube that increases the rigidity of the spindle axis.

Although the invention has been described in connection with preferred embodiments and certain alternatives, other alternatives, modifications and variations may be apparent to those skilled in the art in view of the foregoing description. Accordingly, it is intended to embrace all such alternatives, modifications and variations as fall within the spirit and scope of the appended claims.

### reference signs

10 base plate; walls
12 partition
14 hub
15 flange
16 shaft
17 rotor
18 magnet
19 spindle axis
21 ferromagnetic shielding ring; ferromagnetic shield
22 flange
24 bearing tube
26 projection
28 stator
29 winding
30 disks
31 clamping ring
32 transducers
33 spacer ring
34 sealing member; seal
35 washer
36 gap
38 contact member
40 printed circuit board (PCB)
42 connector pin
44 annular groove
50 gap
61 pad
62 contact pin
63 housing
64 spring
66 stator leads
CR clean room chamber

## Claims

1. A disk storage device, comprising in combination:
a housing having walls (10) enclosing a clean room chamber (CR) ;
at least one data storage disk (30) located in said clean room chamber (CR);
transducer means (32) positioned to cooperate with a surface on said data storage disk (30) to read data recorded thereon; a motor for rotating said data storage disk (30), said motor including a hub (14) for receiving said data storage disk (30), a shaft (16) attached to said hub (14) for rotation therewith, a bearing system for rotatably supporting said shaft (16) and hub (14), a rotor (17) having a cylindrical surface and fixed to said shaft (16) at an end thereof opposite said hub (14) , an annular permanent magnet (18) mounted on the cylindrical surface of said rotor (17), and a stator (28) including a winding (29), said stator (28) being affixed to a wall (10) of said housing and surrounding said annular permanent magnet (18) so as to be spaced therefrom by a cylindrically-shaped air gap (36,50), whereby magnetic flux generated by said stator (28) interacts with said permanent magnet (18) to apply a rotary driving force to said rotor (17), shaft (16) and hub (14); and sealing means for retarding a transfer of contaminants into said clean-room chamber (CR), whereby said sealing means comprise a labyrinth seal between an underside of the hub (14) and an upper end of the housing walls (10),
c h a r a c t e r i z e d i n t ha t
a radially-extending ferromagnetic shield (21) located between said stator (28) and an adjacent section of said wall of said housing.

2. The disk storage device of claim 1 wherein a cylindrical support member is supported on a wall (10) of said housing (63) and has a first portion projecting (26) from said wall (10) into said clean room chamber (CR) and a second portion, concentric with said first portion, projecting (26) from said wall (10) away from said clean room chamber (CR).

3. The disk storage device of claim 2 wherein said hub (14) has an internal recess that is shaped to fit around said first portion of said cylindrical support member.

4. The disk storage device of claim 2 further comprising an annular sealing member (34) mounted at the end of said first portion of said cylindrical support member to retard the transfer of contaminants from said bearing system into said clean room chamber (CR).

5. The disk storage device of claim 3 wherein a surface of said internal recess is dimensioned to be closely spaced from the outer surface of said first portion of said cylindrical support member, whereby said surfaces form a narrow gap (36,50) for retarding the transfer of contaminants into said clean-room chamber(CR).

6. The data storage device of claim 3 wherein said cylindrical surface of said rotor (17) is concentric with and overlaps the second portion of said cylindrical support member.

7. The data storage device of claim 1 wherein the portion of said rotor (17) adjacent to said permanent magnet (18) is made of ferromagnetic material.

8. The data storage device of claim 1 wherein said ferromagnetic shield (21) is in the shape of a ring that is coextensive with at least the radial extent of said stator (28).

9. The data storage device of claim 1 wherein said ferromagnetic shield (21) is in the shape of a ring that is coextensive with the radial extent of said stator (28), said air gap (36,50) and a portion of said permanent magnet (18).

10. The data storage device of claim 1 wherein said motor is a brushless D.C. motor.

11. The data storage device of claim 1 further comprising a labyrinth seal (34) formed by an element on said hub (14) that is closely spaced from an element on a wall (10) of said clean room chamber (CR).

12. The data storage device of claim 1 further comprising a circuit support mounted adjacent a wall (10) of said clean room chamber (CR), control circuitry contained on said circuit support for producing timed current pulses for energizing said motor, and a contact pin (42) mounted on said wall (10) for connecting said control circuitry with said stator (28) winding (29).

13. The data storage device of claim 12 wherein said contact pin (62) is spring-biased toward said circuit support.

14. The data storage device of claim 13 further comprising a conductive pad (61) arranged to engage said spring-biased contact pin (62), said pad (61) being mounted on said circuit support and connected to said control circuitry.

15. The data storage device of claim 1 wherein said hub (14) and shaft (16) form an integral, one-piece unit.

16. The data storage device of claim 15 wherein said hub (14) and shaft (16) are made of steel.

17. The data storage device of claim 15 wherein said hub (14) and shaft (16) are made of aluminum.

## Patentansprüche

1. Plattenspeichergerät, das in Kombination aufweist:
ein Gehäuse, das Wände (10) aufweist, die eine Reinraumkammer (CR) einfassen,
mindestens eine Datenspeicherplatte (30), die in der Reinraumkammer (CR) angeordnet ist;
Signalumwandlermittel (32), das angeordnet ist, um mit einer Oberfläche auf der Datenspeicherplatte (30) zusammenzuwirken, um darauf aufgenommene Daten zu lesen;
einen Motor zum Drehen der Datenspeicherplatte (30), wobei der Motor eine Nabe (14) zur Aufnahme der Datenspeicherplatte (30) aufweist, eine an der Nabe (14) befestigte Spindel (16) zur Drehung mit dieser, eine Lageranordnung zum drehbaren Lagern der Spindel (16) und der Nabe (14), einen Rotor (17), der eine zylindrische Oberfläche aufweist und an der Spindel (16) an einem Ende von dieser befestigt ist, das der Nabe (14) gegenüber liegt, einen ringförmigen Permanentmagneten (18), der auf der zylindrischen Oberfläche des Rotors (17) montiert ist, und einen Stator (28), der eine Wicklung (29) aufweist, wobei der Stator (28) an einer Wand (10) des Gehäuses befestigt ist und den ringförmigen Permanentmagneten (18) umschließt, so dass er von diesem beabstandet ist durch einen zylindrisch geformten Luftspalt (36, 50), wodurch durch den Stator (28) erzeugter Magnetfluss mit dem Permanentmagneten (18) wechselwirkt, um eine drehende Antriebskraft auf den Rotor (17), die Spindel (16) und die Nabe (14) aufzubringen; und Abdichtungsmittel um eine Übertragung von Verunreinigungen in die Reinraumkammer (CR) zu verhindern, wobei die Abdichtungsmittel eine Labyrinthdichtung zwischen einer Unterseite der Nabe (14) und einem oberen Ende der Gehäusewände (10) aufweisen,
**dadurch gekennzeichnet, dass**
eine sich radial erstreckende ferromagnetische Abschirmung (21) zwischen dem Stator (28) und einem angrenzenden Abschnitt der Wand des Gehäuses angeordnet ist.

2. Plattenspeichergerät nach Anspruch 1, wobei ein zylindrische Tragelement (24) auf einer Wand (10) des Gehäuses (63) gelagert ist und einen ersten Teil aufweist, der von der Wand (10) in die Reinraumkammer (CR) ragt (26), und einen zweiten mit dem ersten Teil konzentrischen Teil, der von der Wand (10) weg von der Reinraumkammer (CR) ragt (26).

3. Plattenspeichergerät nach Anspruch 2, wobei die Nabe (14) eine innen liegende Aussparung aufweist, die so ausgeformt ist, dass sie um den ersten Teil des zylindrischen Tragelements herum passt.

4. Plattenspeichergerät nach Anspruch 2, das weiterhin ein ringförmiges Abdichtelement (34) aufweist, das am Ende des ersten Teils des zylindrischen Tragelements montiert ist, um die Übertragung von Verunreinigungen von der Lageranordnung in die Reinraumkammer (CR) zu verhindern.

5. Plattenspeichergerät nach Anspruch 3, wobei eine Oberfläche der innen liegenden Aussparung so dimensioniert ist, dass sie eng beabstandet ist von der äußeren Oberfläche des ersten Teils des zylindrischen Tragelements, wodurch die Oberflächen einen engen Spalt (36, 50) ausformen, um die Übertragung von Verunreinigungen in die Reinraumkammer (CR) zu verhindern.

6. Datenspeichergerät nach Anspruch 3, wobei die zylindrische Oberfläche des Rotors (17) konzentrisch ist mit dem zweiten Teil des zylindrischen Tragelements und diesen überlappt.

7. Datenspeichergerät nach Anspruch 1, wobei der an den Permanentmagneten (18) angrenzende Teil des Rotors (17) aus ferromagnetischem Material hergestellt ist.

8. Datenspeichergerät nach Anspruch 1, wobei die ferromagnetische Abschirmung (21) in der Form eines Ringes ist, der flächengleich ist mit mindestens der radialen Ausdehnung des Stators (28).

9. Datenspeichergerät nach Anspruch 1, wobei die ferromagnetische Abschirmung (21) in der Form eines Ringes ist, der flächengleich ist mit der radialen Ausdehnung des Stators (28), des Luftspalts (36, 50) und einem Teil des Permanentmagneten (18).

10. Datenspeichergerät nach Anspruch 1, wobei der Motor ein bürstenloser Gleichstrommotor ist.

11. Datenspeichergerät nach Anspruch 1, das weiterhin eine Labyrinthdichtung (34) aufweist, die durch ein Element auf der Nabe (14) ausgeformt ist das eng beabstandet ist von einem Element auf einer Wand (10) der Reinraumkammer (CR).

12. Datenspeichergerät nach Anspruch 1, das weiterhin eine Schaltungshalterung aufweist, die angrenzend zu einer Wand (10) der Reinraumkammer (CR) montiert ist, eine Steuerschaltung, die auf der Schaltungshalterung angeordnet ist, um zeitlich festgelegte Stromimpulse zu erzeugen um den Motor mit Strom zu versorgen, und einen Kontaktstift (42), der auf der Wand (10) montiert ist, um die Steuerschaltung mit der Stator-(28) Wicklung (29) zu verbinden.

13. Datenspeichergerät nach Anspruch 12, wobei der Kontaktstift (62) durch eine Feder gegen die Schaltungshalterung vorgespannt ist.

14. Datenspeichergerät nach Anspruch 13, das weiterhin ein leitfähiges Anschlussfeld (61) aufweist, das angeordnet ist, um den durch eine Feder vorgespannten Kontaktstift (62) zu kontaktieren, wobei das Anschlussfeld (61) auf der Schaltungshalterung montiert ist und mit der Steuerschaltung verbunden ist.

15. Datenspeichergerät nach Anspruch 1, wobei die Nabe (14) und die Spindel (16) eine integrierte, aus einem Stück bestehende Einheit ausformen.

16. Datenspeichergerät nach Anspruch 15, wobei die Nabe (14) und die Spindel (16) aus Stahl hergestellt sind.

17. Datenspeichergerät nach Anspruch 15, wobei die Nabe (14) und die Spindel (16) aus Aluminium hergestellt sind.

## Revendications

1. Dispositif de mémoire à disque comportant en combinaison :
- un boîtier ayant des parois (10) formant une chambre blanche (CR),
- au moins un disque d'enregistrement de données (30) dans la chambre blanche (CR),
- un moyen de transduction (32) positionné pour coopérer avec une surface du disque d'enregistrement de données (30) pour lire les données enregistrées sur le disque,
- un moteur pour entraîner en rotation le disque d'enregistrement de données (30),
- le moteur comportant un moyeu (14) recevant le disque d'enregistrement de données (30), un arbre (16) fixé au moyeu (14) pour tourner avec lui, un système de palier pour porter à rotation l'arbre (16) et le moyeu (14), un rotor (17) à surface cylindrique, fixé à l'arbre (16) à son extrémité opposée à celle du moyeu (14), un aimant permanent annulaire (18) installé sur la surface cylindrique du rotor (17) et un stator (28) comportant un enroulement (29), le stator (28) étant fixé à la paroi (10) du boîtier et entourant l'aimant permanent annulaire (18) de façon à être espacé de celui-ci d'un entrefer cylindrique (36, 50),
- le flux magnétique généré par le stator (28) coopérant avec l'aimant permanent (18) pour appliquer une force d'entraînement en rotation du rotor (17) à l'arbre (16) et au moyeu (14), ainsi que des moyens d'étanchéité pour retarder le passage des produits de contamination dans la chambre blanche (CR), le moyen d'étanchéité comportant un joint en labyrinthe entre la face inférieure du moyeu (14) et l'extrémité supérieure des parois (10) du boîtier,
**caractérisé en ce que**
un écran ferromagnétique (21) s'étendant radialement est placé entre le stator (28) et la section adjacente de la paroi du boîtier.

2. Dispositif de mémoire à disque selon la revendication 1,
selon lequel
un élément de support cylindrique est monté sur une paroi (10) du boitier (63) et comporte une première partie en saillie (26) par rapport à la paroi (10) vers la chambre blanche (CR) et une seconde partie concentrique à la première partie, venant en saillie (26) par rapport à la paroi (10) à l'opposé de la chambre blanche (CR).

3. Dispositif de mémoire à disque selon la revendication 2,
selon lequel
le moyeu (14) comporte une cavité interne dont la forme s'adapte autour de la première partie de l'élément de support cylindrique.

4. Dispositif de mémoire à disque selon la revendication 2, comportant en outre un élément de joint annulaire (34) sur l'extrémité de la première partie de l'élément de support cylindrique pour retarder le passage des produits de contamination du système de palier dans la chambre blanche (CR).

5. Dispositif de mémoire à disque selon la revendication 3,
selon lequel
la surface de la cavité interne est dimensionnée pour être étroitement espacée de la surface extérieure de la première partie de l'élément de support cylindrique, les surfaces formant un intervalle étroit (36, 50) pour retarder le passage des produits de contamination dans la chambre blanche (CR).

6. Dispositif de mémoire à disque selon la revendication 3,
selon lequel
la surface cylindrique du rotor (17) est concentrique à la seconde partie de l'élément de support cylindrique et chevauche cette seconde partie.

7. Dispositif de mémoire à disque selon la revendication 1,
selon lequel
la partie du rotor (17) adjacente à l'aimant permanent (18) est en matière ferromagnétique.

8. Dispositif de mémoire à disque selon la revendication 1,
selon lequel
l'écran ferromagnétique (21) a la forme d'un anneau s'étendant au moins selon l'extension radiale du stator (28).

9. Dispositif de mémoire à disque selon la revendication 1,
selon lequel
l'écran ferromagnétique (21) a la forme d'un anneau s'étendant selon l'extension radiale du stator (28), suivant l'entrefer (36, 50) et suivant une partie de l'aimant permanent (18).

10. Dispositif de mémoire à disque selon la revendication 1,
selon lequel
le moteur est un moteur à courant continu sans balais.

11. Dispositif de mémoire à disque selon la revendication 1, comportant en outre un joint en labyrinthe (34) réalisé par un élément du moyeu (14) étroitement écarté d'un élément de la paroi (10) de la chambre blanche (CR).

12. Dispositif de mémoire à disque selon la revendication 1, comportant en outre un support de circuit adjacent à la paroi (10) de la chambre blanche (CR), un circuit de commande sur le support de circuit pour générer des impulsions de courant, cadencées, pour alimenter le moteur et les branches de contact (42) portées par la paroi (10) pour relier le circuit de commande à l'enroulement (29) du stator (28).

13. Dispositif de mémoire à disque selon la revendication 12,
selon lequel
la broche de contact (62) est poussée élastiquement vers le support de circuit.

14. Dispositif de mémoire à disque selon la revendication 13, comportant en outre un patin conducteur (61) coopérant avec la broche de contact (62) poussée élastiquement, le patin (61) étant monté sur le support de circuit et relié au circuit de commande.

15. Dispositif de mémoire à disque selon la revendication 1,
selon lequel
le moyeu (14) et l'arbre (16) sont réalisés intégralement en une seule pièce.

16. Dispositif de mémoire à disque selon la revendication 15,
selon lequel
le moyeu (14) et l'arbre (16) sont en acier.

17. Dispositif de mémoire à disque selon la revendication 15,
selon lequel
le moyeu (14) et l'arbre (16) sont en aluminium.
